# EUROPÄISCHE PATENTANMELDUNG

(11) **EP 4 290 034 A1**
(43) Veröffentlichungstag der Anmeldung: **13.12.2023**
(21) Anmeldenummer: 23178002.4
(22) Anmeldetag: 07.06.2023
(51) Int. Cl.: E04H 15/06, B60P 3/34, B60R 9/06

(54) **ZELT**

(30) Priorität: 10.06.2022 AT 1262022
(71) Anmelder: Pachlhofer, Dietmar Walter, 6600 Pinswang (AT); Schmid, Kurt, 6600 Pinswang (AT)
(72) Erfinder: Pachlhofer, Dietmar Walter, 6600 Pinswang (AT); Schmid, Kurt, 6600 Pinswang (AT)
(74) Vertreter: Torggler & Hofmann Patentanwälte - Rankweil

(57) **Zusammenfassung**

Zelt (1) mit zumindest einer Zeltbodenplatte (2) und einer Befestigungsvorrichtung (3) zur Befestigung des Zelts (1) am Heck (4) eines Kraftfahrzeugs (5), wobei die Befestigungsvorrichtung (3) einen heckseitigen Träger (6) zur Montage am Heck (4) des Kraftfahrzeugs (5) und einen, mit der Zeltbodenplatte (2) verbundenen oder verbindbaren, zeltbodenseitigen Träger (7) und ein Trägerschwenkgelenk (8) aufweist, wobei der zeltbodenseitige Träger (7) mittels des Trägerschwenkgelenks (8) schwenkbar am heckseitigen Träger (6) befestigt ist.

## Beschreibung

Die vorliegende Erfindung betrifft ein Zelt mit zumindest einer Zeltbodenplatte und einer Befestigungsvorrichtung zur Befestigung des Zelts am Heck eines Kraftfahrzeugs.

Es ist beim Stand der Technik z.B. aus der DE 37 02 953 A1 bekannt, Zelte als sogenannte Dachzelte auszugestalten, welche auf dem Dach eines Kraftfahrzeugs transportiert und dort dann zum Übernachten ausgeklappt werden können.

Aus der US 2017/0240088 A1 ist ein zeltartiger Aufbau bekannt, welcher zur Befestigung am Heck eines Kraftfahrzeugs vorgesehen ist.

Die Befestigung eines entsprechenden Zelts am Heck des Kraftfahrzeugs ist zwar einerseits kraftstoffsparend, da das Zelt direkt im Windschatten des Kraftfahrzeugs mitfährt. Andererseits blockieren die beim Stand der Technik bekannten Zelte am Heck eines Kraftfahrzeugs aber das Öffnen der Heckklappe bzw. der Hecktüren am Heck des Kraftfahrzeugs.

Aufgabe der Erfindung ist es, diesbezüglich eine Verbesserung vorzuschlagen.

Bei gattungsgemäßen Zelten der eingangs genannten Art ist hierfür vorgesehen, dass die Befestigungsvorrichtung einen heckseitigen Träger zur Montage am Heck des Kraftfahrzeugs und einen, mit der Zeltbodenplatte verbundenen oder verbindbaren, zeltbodenseitigen Träger und ein Trägerschwenkgelenk aufweist, wobei der zeltbodenseitige Träger mittels des Trägerschwenkgelenks schwenkbar am heckseitigen Träger befestigt ist.

Die Erfindung ermöglicht es, das Zelt während des Transports am Heck des Fahrzeugs zu befestigen. Steht das Fahrzeug und soll die Heckklappe oder Hecktür des Kraftfahrzeugs geöffnet werden, so erlaubt es die Erfindung, den zeltbodenseitigen Träger mittels des Trägerschwenkgelenks beiseite zu schwenken, sodass die Zeltbodenplatte nicht mehr das Öffnen der Klappe oder Tür am Heck des Kraftfahrzeugs blockiert.

Günstigerweise ist dabei vorgesehen, dass das Trägerschwenkgelenk eine, im fertig am Heck des Kraftfahrzeugs montierten Zustand des Zelts, vertikal verlaufende Schwenkachse aufweist, um die der zeltbodenseitige Träger relativ zum heckseitigen Träger verschwenkbar ist. In solchen Ausgestaltungsformen wird der zeltbodenseitige Träger somit um die vertikal verlaufende Schwenkachse in einer horizontalen Ebene verschwenkt, wenn das Kraftfahrzeug auf einem entsprechend horizontalen ebenen Boden steht. Dies erlaubt auch ein sehr kräftesparendes Verschwenken, da nicht oder zumindest nur kaum gegen die Schwerkraft gearbeitet werden muss, um den zeltbodenseitigen Träger relativ zum heckseitigen Träger zu verschwenken.

Günstigerweise ist der heckseitige Träger als länglich erstreckter Tragbalken ausgebildet. Dies gilt günstigerweise auch für den zeltbodenseitigen Träger. Auch dieser ist also in bevorzugten Ausgestaltungsformen als länglich erstreckter Tragbalken ausgebildet. Besonders bevorzugt ist vorgesehen, wenn der heckseitige Träger und der zeltbodenseitige Träger an jeweils einem ihrer Enden mittels des Trägerschwenkgelenks schwenkbar miteinander verbunden sind.

Der heckseitige Träger wird in geeigneter Art und Weise am Heck des Kraftfahrzeugs fixiert. Besonders bevorzugt ist hierbei vorgesehen, dass zur Befestigung des heckseitigen Trägers die Montagepunkte am Kraftfahrzeug verwendet werden, die für die Anhängerkupplung vorgesehen sind. Diese befinden sich in der Regel an einem Leiterrahmen des Kraftfahrzeugs und erlauben eine sehr stabile Befestigung des Zelts mit seiner Befestigungsvorrichtung am Heck des Kraftfahrzeugs.

Günstigerweise ist vorgesehen, dass die Zeltbodenplatte an einem Bodenplattenträger befestigt ist und der Bodenplattenträger am zeltbodenseitigen Träger befestigt ist. Bevorzugte Ausgestaltungsformen sehen dabei vor, dass die Zeltbodenplatte mittels zumindest eines Bodenplattenschwenkgelenks am Bodenplattenträger schwenkbar befestigt ist. Dies erlaubt es, dass die Zeltbodenplatte in der Transportstellung, welche sie während des Transports des Zeltes am Heck des Kraftfahrzeugs aufweist, in einer vertikalen Ebene verläuft. Ist der Zeltplatz dann erreicht, so kann die Zeltbodenplatte zum Aufbau des Zelts um das Bodenplattenschwenkgelenk am Bodenplattenträger geschwenkt werden. Günstigerweise ist dabei vorgesehen, dass das Bodenplattenschwenkgelenk eine, im fertig am Heck des Kraftfahrzeugs montierten Zustand des Zelts, horizontal verlaufende Schwenkachse aufweist, um die die Zeltbodenplatte relativ zum Bodenplattenträger verschwenkbar ist. Um das Zelt in der Transportstellung, also während des Transports mit dem Kraftfahrzeug gut zu fixieren, ist günstigerweise vorgesehen, dass die Zeltbodenplatte in einer Transportstellung des Zelts zusätzlich zu dem zumindest einen Bodenplattenschwenkgelenk mittels zumindest einer lösbaren Bodenplattenarretierung am Bodenplattenträger fixierbar ist, wobei die zumindest eine Bodenplattenarretierung zumindest in der Transportstellung distanziert zu dem zumindest einen Bodenplattenschwenkgelenk, vorzugsweise distanziert zu allen Bodenplattenschwenkgelenken, angeordnet ist.

Um das Zelt, insbesondere in der fertig aufgebauten Schlafstellung, auf einfache Art und Weise vom Kraftfahrzeug lösen zu können, sehen besonders bevorzugte Ausgestaltungsformen der Erfindung vor, dass der Bodenplattenträger mittels einer lösbaren Arretierungsvorrichtung am zeltbodenseitigen Träger, vorzugsweise werkzeuglos, befestigbar und von diesem, vorzugsweise werkzeuglos, ablösbar ist. Um das Zelt beim Transport mittels des Kraftfahrzeugs möglichst gut in seiner Transportstellung zu sichern, sehen besonders bevorzugte Varianten der Erfindung vor, dass die Zeltbodenplatte in einer bzw. der Transportstellung des Zelts mittels zumindest einer, auf Zug spannbaren, Spannvorrichtung des Zelts gegen den zeltbodenseitigen Träger abspannbar ist. Bei der Spannvorrichtung kann es sich um ein entsprechend spannbares Gestänge, aber auch um eine spannbare Kette oder um ein Spannband handeln. Es können auch auf beiden Seiten der Zeltbodenplatte entsprechende Spannvorrichtungen vorgesehen sein.

Je nach Größe des Zelts und auch des Kraftfahrzeugs kann die Zeltbodenplatte einstückig aber auch mehrteilig ausgeführt sein. Besonders bevorzugte Varianten sehen vor, dass die Zeltbodenplatte zumindest zwei klappbar miteinander verbundene Zeltbodenteilplatten aufweist. Diese sind günstigerweise mittels zumindest eines Klappgelenks klappbar miteinander verbunden. Auch beim Vorhandensein von zwei oder mehr Zeltbodenteilplatten ist günstigerweise vorgesehen, dass diese in der Transportstellung im Wesentlichen in einer vertikalen Ebene angeordnet sind. Bei einem Kraftfahrzeug mit entsprechend vertikal verlaufendem Heck, wie z.B. einem Campingbus oder einem Wohnmobil können die Zeltbodenplatte oder, soweit vorhanden, eben die klappbar miteinander verbundenen Zeltbodenteilplatten in der Transportstellung im Wesentlichen parallel zur Heckwand des Kraftfahrzeugs angeordnet sein. Unabhängig davon, ob es sich um eine einstückige Zeltbodenplatte oder zwei oder mehr miteinander klappbar verbundene Zeltbodenteilplatten handelt, ist günstigerweise vorgesehen, dass an der Zeltbodenplatte bzw. den Zeltbodenteilplatten Standfüße vorgesehen sind, auf denen die Zeltbodenplatte oder die Zeltbodenteilplatten auf dem Untergrund abgestellt werden können, wenn das Zelt zum Schlafen fertig aufgebaut wird. Diese Standfüße können abnehmbar und/oder auch klappbar an der Zeltbodenplatte oder an den Zeltbodenteilplatten befestigt sein. Bevorzugt handelt es sich um höhenverstellbare Standfüße, um Unebenheiten im Untergrund ausgleichen zu können.

Bei bevorzugten Ausgestaltungsformen des erfindungsgemäßen Zeltes ist vorgesehen, dass das Zelt zumindest eine mit der Zeltbodenplatte verbundene oder verbindbare, in einer aufgebauten Stellung des Zelts über die Zeltbodenplatte gespannte Zeltplane aufweist. Entsprechendes gilt natürlich auch in dem Fall, dass die Zeltbodenplatte aus zwei oder mehr klappbar miteinander verbundenen Zeltbodenteilplatten besteht. Die Zeltplane kann im aufgebauten Zustand des Zelts sowohl die Seitenwände als auch das Dach des Zeltes bilden. Anstelle von meist textilen Zeltplanen kann ein erfindungsgemäßes Zelt zur Ausbildung der Seitenwände und/oder des Dachs aber auch plattenförmige Elemente aufweisen, welche entsprechend zusammenfaltbar oder miteinander verbindbar mit der Zeltbodenplatte verbunden sind oder werden können. Das Zelt muss also nicht zwingend eine textile Zeltplane aufweisen. Die Seitenwände und das Dach des Zelts können auch aus anderen geeigneten Elementen bestehen, so wie dies z.B. in der eingangs erwähnten US 2017/0240088 A1 der Fall ist.

Weitere Merkmale und Einzelheiten bevorzugter Ausgestaltungsformen der Erfindung werden exemplarisch in der nachfolgenden Figurenbeschreibung erläutert. Es zeigen:
- Fig. 1: ein erfindungsgemäßes Zelt in der Transportstellung am Heck eines Kraftfahrzeugs;
- Fig. 2: das Zelt aus Fig. 1 in der Transportstellung in vergrößerter Darstellung;
- Fig. 3: das Zelt aus Fig. 1 in einer vom Heck des Fahrzeugs weggeschwenkten Stellung;
- Fig. 4: eine Detaildarstellung zur Ausbildung der Bodenplattenschwenkgelenke;
- Fig. 5: eine Detaildarstellung zur Ausbildung der Bodenplattenarretierung und der lösbaren Arretierungsvorrichtung dieses Ausführungsbeispiels gemäß der Fig. 1 bis 4;
- Fig. 6: die fertig zum darin Schlafen aufgebaute Stellung des Zelts aus den Fig. 1 bis 5 und
- Fig. 7: noch eine Detaildarstellung zur Erläuterung der Funktionsweise der lösbaren Arretierungsvorrichtung dieses Ausführungsbeispiels.

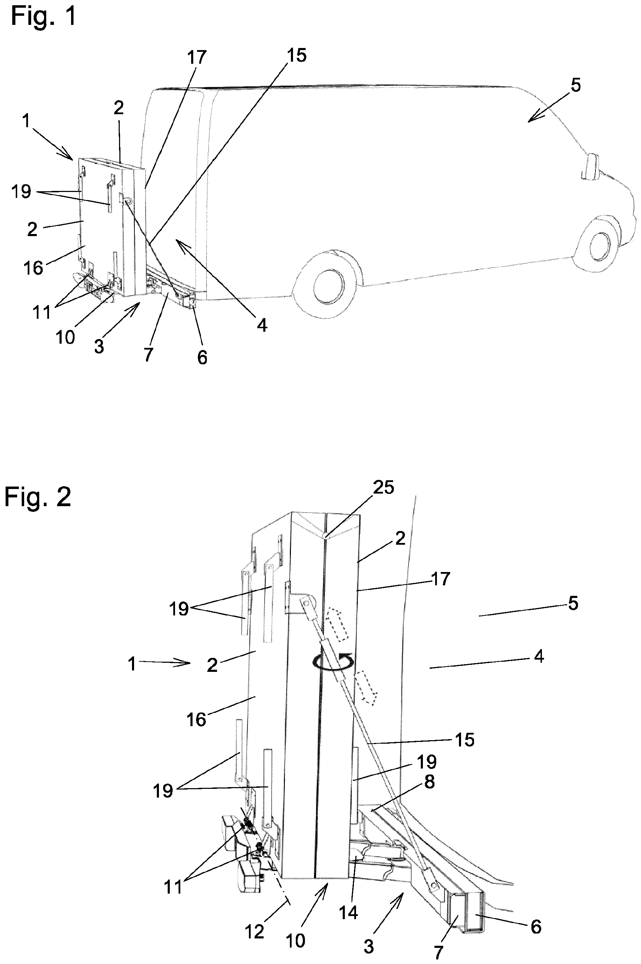

Fig. 1 zeigt ein Ausführungsbeispiel eines erfindungsgemäßen Zelts 1 in der Transportstellung am Heck 4 eines Kraftfahrzeugs 5. Bei dem hier nur schematisch dargestellten Kraftfahrzeug 5 handelt es sich um einen Campingbus. Es kann sich aber auch um andere, an sich bekannte Kraftfahrzeuge handeln. Das Zelt 1 ist mittels der erfindungsgemäß ausgebildeten Befestigungsvorrichtung 3 am Heck 4 des Kraftfahrzeugs 5 befestigt. Die Befestigungsvorrichtung 3 weist einen heckseitigen Träger 6 auf, welcher zur Montage am Heck 4 des Kraftfahrzeugs 5 vorgesehen ist. Die Montage des heckseitigen Trägers 6 erfolgt, wie weiter oben bereits erläutert, günstigerweise an den Montagepunkten des Kraftfahrzeugs, welche für die Anhängerkupplung vorgesehen sind. Diese befinden sich üblicherweise am Leiterrahmen des Kraftfahrzeugs 5. Erfindungsgemäß ist der heckseitige Träger 6 über ein Trägerschwenkgelenk 8 mit dem zeltbodenseitigen Träger 7 verbunden. Der zeltbodenseitige Träger 7 ist der Teil der Befestigungsvorrichtung 3, an dem die Zeltbodenplatte 2 befestigt ist. Der zeltbodenseitige Träger 7 ist erfindungsgemäß mittels des Trägerschwenkgelenks 8 schwenkbar am heckseitigen Träger 6 befestigt.

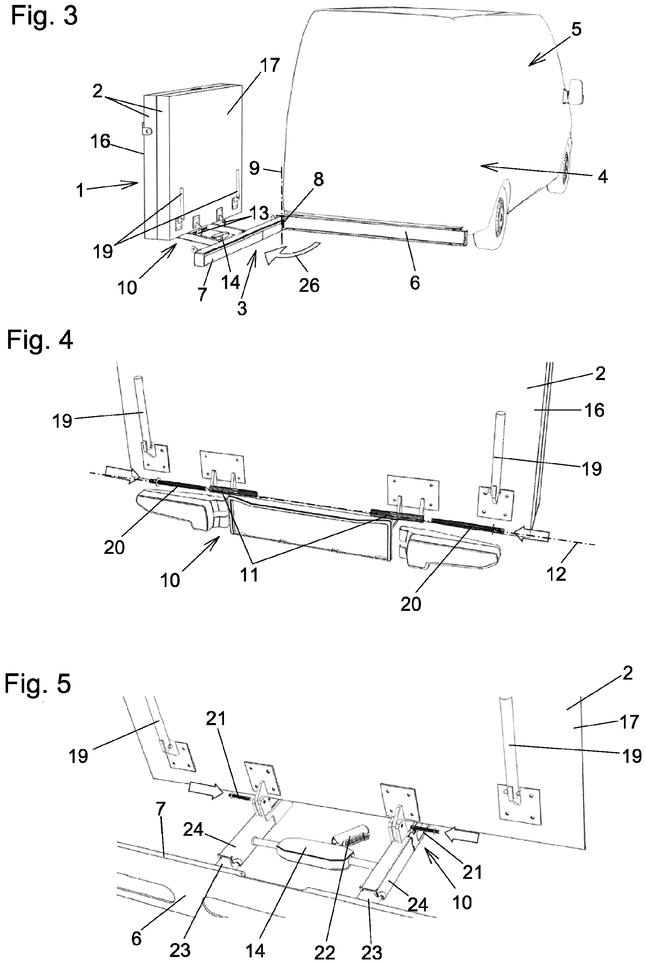

Fig. 2 zeigt das Zelt 1 am Heck 4 des Kraftfahrzeugs 5 vergrößert. Fig. 3 zeigt, wie der zeltbodenseitige Träger 7 um das Trägerschwenkgelenk 8 vom heckseitigen Träger 6 und damit auch vom Heck 4 des Kraftfahrzeugs 5 weggeschwenkt werden kann. Der Doppelpfeil 26 in Fig. 3 veranschaulicht die Schwenkbewegungen des zeltbodenseitigen Trägers 7 relativ zum heckseitigen Träger 6. Ist das Zelt 1 entsprechend vom Heck 4 des Kraftfahrzeugs 5 weggeschwenkt, wie dies in Fig. 3 dargestellt ist, so können am Heck 4 vorhandene Heckklappen oder Hecktüren des Kraftfahrzeugs 5 ohne Probleme geöffnet werden, sodass ein entsprechender hinterer Kofferraumbereich des Kraftfahrzeugs 5 frei zugänglich ist. In Fig. 3 ist auch die im fertig am Heck 4 des Kraftfahrzeugs 5 montierten Zustand des Zelts vertikal verlaufende Schwenkachse 9 eingezeichnet, um die der zeltbodenseitige Träger 7 dieses Ausführungsbeispiels relativ zum heckseitigen Träger 6 verschwenkbar ist. Hier ist auch gut zu sehen, dass sowohl der heckseitige Träger 6 als auch der zeltbodenseitige Träger 7 jeweils als länglich erstreckte Tragbalken ausgebildet sind. Es ist auch veranschaulicht, dass diese beiden Träger 6 und 7 günstigerweise jeweils an einem ihrer Enden mittels des Trägerschwenkgelenks 8 schwenkbar miteinander verbunden sind.

In diesem Ausführungsbeispiel weist die Zeltbodenplatte 2 zwei klappbar miteinander verbundene Zeltbodenteilplatten 16 und 17 auf. Dies muss zwar nicht zwingend so sein, ist aber bevorzugt vorgesehen, wenn eine entsprechend große Zeltbodenplatte 2 benötigt wird. Fig. 1 und 2 zeigen auch gut, dass die Zeltbodenplatte 2 bzw. deren Zeltbodenteilplatten 16 und 17 in der Transportstellung günstigerweise in einer vertikalen Ebene verlaufen. Bei einer entsprechend vertikal verlaufend ausgebildeten Heckpartie des Kraftfahrzeugs 5 stehen dann die Zeltbodenplatte 2 bzw. deren Zeltbodenteilplatten 16 und 17 günstigerweise, wie in Fig. 1 auch zu sehen, mehr oder weniger parallel zum Heck 4 des Kraftfahrzeugs 5, wenn sich das Zelt 1 in der Transportstellung befindet.

In Fig. 2 ist auch das Klappgelenk 25 zu sehen, welches die Zeltbodenteilplatten 16 und 17 klappbar miteinander verbindet. In den Fig. 1 und 2 sieht man auch gut, dass in diesem Ausführungsbeispiel die Zeltbodenplatte 2 an einem Bodenplattenträger 10 befestigt ist und der Bodenplattenträger 10 am zeltbodenseitigen Träger 7 befestigt ist. Am Bodenplattenträger 10 befindet sich in diesem, wie auch in anderen bevorzugten Ausgestaltungsformen günstigerweise zumindest ein Bodenplattenschwenkgelenk 11. Mittels dieses Bodenplattenschwenkgelenks 11 kann die Zeltbodenplatte 2 in diesem Ausführungsbeispiel die Zeltbodenteilplatte 16 schwenkbar am Bodenplattenträger 10 befestigt werden. Im fertig am Heck 4 des Kraftfahrzeugs 5 montierten Zustand des Zelts 1 weist das Bodenplattenschwenkgelenk 11, wie in Fig. 2 eingezeichnet, eine horizontal verlaufende Schwenkachse 12 auf. Um diese ist die Zeltbodenplatte 2 bzw. hier die Zeltbodenteilplatte 16 verschwenkbar am Bodenplattenträger 10 gelagert.

Fig. 4 zeigt dies noch einmal vergrößert in einer Detailansicht von hinten. In Fig. 4 sind die Achsbolzen 20 des Bodenplattenschwenkgelenks 11 in einer Explosionsdarstellung herausgezogen dargestellt. Dies ist möglich, um die Zeltbodenplatte 2 bzw. die beiden Zeltbodenteilplatten 16 und 17 vom Bodenplattenträger 10 abzunehmen. Im Betriebszustand sind die Achsbolzen 20 aber natürlich in das Bodenplattenschwenkgelenk 11 entsprechend weit eingeschoben. Sowohl die Fig. 2 als auch die Fig. 4 zeigen die horizontale Schwenkachse 12.

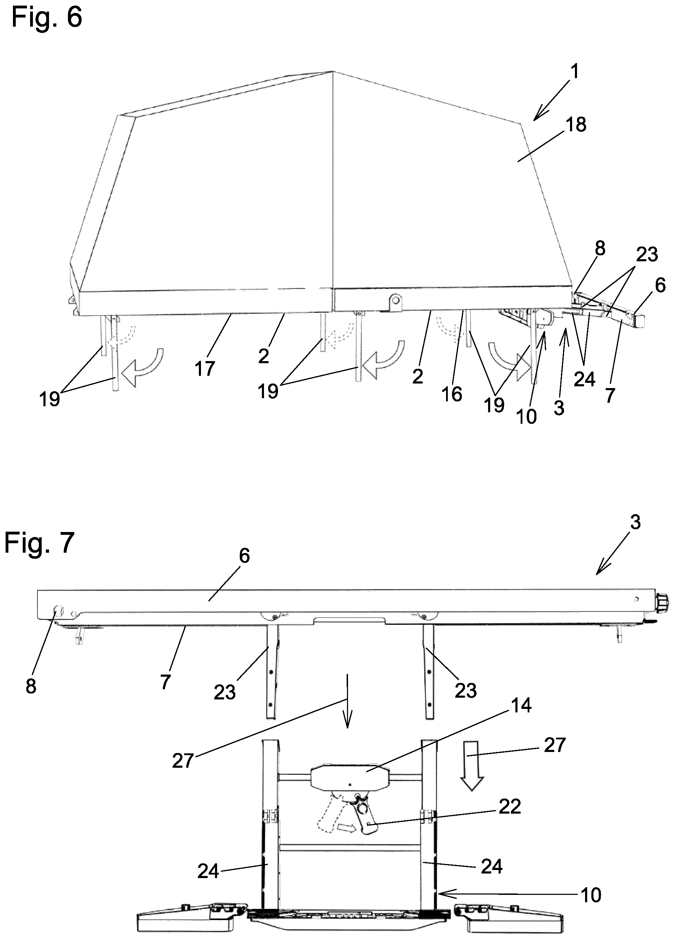

Fig. 5 zeigt eine Ansicht aus Richtung des Fahrzeugs hin zur Zeltbodenteilplatte 17 in der Transportstellung. Auf dieser Seite der Zeltbodenplatte 2 bzw. hier der Zeltbodenteilplatten 17 befindet sich in bevorzugten Ausgestaltungsformen, wie der hier gezeigten, eine zusätzlich zu den Bodenplattenschwenkgelenken 11 vorgesehene lösbare Bodenplattenarretierung 13. Mit dieser kann die Zeltbodenplatte 2 bzw. hier die Zeltbodenteilplatten 16 und 17 in der Transportstellung zusätzlich am Bodenplattenträger 10 lösbar fixiert werden. Die Bodenplattenarretierungen 13 sind günstigerweise zumindest in der Transportstellung distanziert zu den Bodenplattenschwenkgelenken 11 angeordnet. Bevorzugt ist dabei vorgesehen, dass in der Transportstellung des Zeltes 1 die Zeltbodenplatte 2 bzw. deren Zeltbodenteilplatten 16 und 17 zwischen dem Bodenplattenschwenkgelenk 11 auf der einen Seite und der lösbaren Bodenplattenarretierung 13 auf der anderen Seite angeordnet sind. In Fig. 5 ist gut zu sehen, dass in diesem Ausführungsbeispiel jeweils ein Bolzen 21 vorgesehen ist, um die Bodenplattenarretierung 13 in ihrer Arretierungsstellung zu arretieren. Werden die Bolzen 21 herausgezogen, so ist die Bodenplattenarretierung 13 gelöst und die Zeltbodenteilplatten 16 und 17 bzw. eben die Zeltbodenplatte 2 können um das Bodenplattenschwenkgelenk 11 und dessen horizontal verlaufende Schwenkachse 12 verschwenkt werden. Die Bodenplattenarretierung 13 ist also üblicherweise nur in der Transportstellung des Zelts 1 aktiv und wird in diesem Ausführungsbeispiel eben durch Herausziehen der Bolzen 21 deaktiviert, wenn das Zelt 1 in seine aufgebaute Stellung, wie sie in Fig. 6 dargestellt ist, gebracht werden soll.

Bevor auf Fig. 6 näher eingegangen wird, wird noch auf die in den Fig. 1 und 2 dargestellte Spannvorrichtung 15 verwiesen. Diese kann, wie eingangs bereits erläutert und wie hier im Ausführungsbeispiel auch realisiert, als eine Art Gestänge aber auch alternativ als Kette oder Spannband ausgeführt sein. Die Spannvorrichtung 15 wird als zusätzliche Transportsicherung in der Transportstellung verwendet und kann nach Beendigung des Transports entfernt werden. In Fig. 1 und 2 befindet sie sich in ihrer Aktivstellung während des Transports des Zeltes 1 am Heck 4 des Kraftfahrzeugs 5. In Fig. 3 und 6 ist die Spannvorrichtung 15 entfernt, da sie dort nicht mehr benötigt wird. Mittels der Spannvorrichtung 15 kann jedenfalls die Zeltbodenplatte 2 bzw. können entsprechend die Zeltbodenteilplatten 16 und 17 gegen den zeltbodenseitigen Träger 7 abgespannt werden. Die Spannvorrichtung 15 ist somit eine zusätzliche Maßnahme, das Zelt 1 in der in Fig. 1 und 2 gezeigten Transportstellung sicher am Kraftfahrzeug 5 zu befestigen. Entsprechend teleskopier- bzw. spannbare Stangen bzw. spannbare Ketten und Spannbänder sind an sich bekannt und müssen hier nicht näher erläutert werden.

In Fig. 5 wird noch auf die hier in diesem Ausführungsbeispiel ebenfalls vorgesehene lösbare Arretierungsvorrichtung 14 verwiesen. Diese erlaubt es, dass der Bodenplattenträger 10, vorzugsweise werkzeuglos, am zeltbodenseitigen Träger 7 befestigt und von diesem ,vorzugsweise werkzeuglos, auch wieder abgelöst werden kann. Fig. 5 zeigt den befestigten Zustand, in dem die Tragstreben 24 des Bodenplattenträgers 10 mittels der Arretierungsvorrichtung 14 an den Tragstreben 23 des zeltbodenseitigen Trägers 7 fixiert sind. Durch ein einfaches Schwenken des Handgriffs 22 kann, wie in Fig. 7 gezeigt, die Arretierungsvorrichtung 14 in ihre entarretierte Stellung gebracht werden, sodass der Bodenplattenträger 10 vom zeltbodenseitigen Träger 7 getrennt werden kann, wie dies in Fig. 7 durch den Pfeil 27 veranschaulicht wird. Hierdurch kann das Zelt 1 sowohl in seinem fertig aufgebauten Zustand gemäß Fig. 6 als auch zur Lagerung samt Bodenplattenträger 10 vom zeltbodenseitigen Träger 7 abgenommen werden. Die am zeltbodenseitigen Träger 7 verbleibenden Tragstreben 23 können dann entweder eingeklappt oder vom zeltbodenseitigen Träger 7 abgenommen werden, sodass das Kraftfahrzeug z.B. während des Campingaufenthalts, losgelöst vom Zelt 1 auch für anderweitige Fahrten genutzt werden kann.

Die Arretierungsvorrichtung 14 kann in verschiedensten, beim Stand der Technik an sich bekannten Arten und Weisen ausgebildet sein. Sie kann z.B. hier nicht dargestellte Sperrbolzen umfassen, die in der Arretierungsstellung so in entsprechende Aufnehmungen in den Tragstreben 23, 24 eingefahren werden, dass diese aneinander fixiert sind. Durch Herausziehen dieser Verriegelungsbolzen mittels Betätigung des Handgriffs 22 können dann die Tragstreben 23 und 24 in der in Fig. 7 dargestellten Art und Weise voneinander getrennt werden. Der Vollständigkeit halber wird noch darauf hingewiesen, dass in Fig. 7 die Zeltbodenteilplatten 16 und 17 nicht dargestellt sind.

In den Fig. 1 bis 6 sind die an der Zeltbodenplatte 2 bzw. an den Zeltbodenteilplatten 16 und 17 befestigten oder befestigbaren Standfüße 19 zu sehen. Diese dienen dazu, die Zeltbodenplatte 2 bzw. deren Zeltbodenteilplatten 16 und 17 in der fertig aufgebauten Stellung des Zelts auf einem Untergrund abzustellen. Im hier gezeigten Ausführungsbeispiel sind die Standfüße schwenkbar an den Zeltbodenteilplatten 16 und 17 befestigt. Es sind aber auch andere, z.B. abnehmbare Varianten von Standfüßen denkbar. Günstig ist es auch, wenn die Standfüße 19 in sich höhenverstellbar bzw. teleskopierbar sind, um damit die gegebenenfalls vorhandene Unebenheiten des Untergrunds, auf dem das Zelt 1 aufgestellt wird, ausgleichen zu können.

Fig. 6 zeigt die aufgebaute Stellung des Zelts 1, wie es mit seiner Zeltbodenplatte 2 und den Standfüßen 19 auf einem hier nicht extra dargestellten Untergrund steht. In dieser aufgebauten Stellung des Zelts, in der in diesem Zelt auch geschlafen werden kann, ist im gezeigten Ausführungsbeispiel eine Zeltplane 18 über die Zeltbodenplatte 2 gespannt. Diese Zeltplane 18 ist mit der Zeltbodenplatte 2 entsprechend verbunden bzw. verbindbar, kann Tür- und Fensterelemente enthalten und wird in der zusammengeklappten Transportstellung des Zelts 1 günstigerweise in einem Innenraum zwischen den Zeltbodenteilplatten 16 und 17 aufgenommen. Die Zeltplane 18 bildet, wie in Fig. 6 gezeigt, die Seitenwände und das Dach des Zelts 1. Wie eingangs bereits erläutert, kann es sich anstelle einer Zeltplane 18 aber auch um entsprechend falt-, klapp- oder zusammenlegbare plattenförmige Elemente handeln.

### Legende zu den Hinweisziffern:

- 1: Zelt
- 2: Zeltbodenplatte
- 3: Befestigungsvorrichtung
- 4: Heck
- 5: Kraftfahrzeug
- 6: heckseitiger Träger
- 7: zeltbodenseitiger Träger
- 8: Trägerschwenkgelenk
- 9: Schwenkachse
- 10: Bodenplattenträger
- 11: Bodenplattenschwenkgelenk
- 12: Schwenkachse
- 13: Bodenplattenarretierung
- 14: Arretierungsvorrichtung
- 15: Spannvorrichtung
- 16: Zeltbodenteilplatte
- 17: Zeltbodenteilplatte
- 18: Zeltplane
- 19: Standfuß
- 20: Achsbolzen
- 21: Bolzen
- 22: Handgriff
- 23: Tragstrebe
- 24: Tragstrebe
- 25: Klappgelenk
- 26: Doppelpfeil
- 27: Pfeil

## Patentansprüche

1. Zelt (1) mit zumindest einer Zeltbodenplatte (2) und einer Befestigungsvorrichtung (3) zur Befestigung des Zelts (1) am Heck (4) eines Kraftfahrzeugs (5), **dadurch gekennzeichnet, dass** die Befestigungsvorrichtung (3) einen heckseitigen Träger (6) zur Montage am Heck (4) des Kraftfahrzeugs (5) und einen, mit der Zeltbodenplatte (2) verbundenen oder verbindbaren, zeltbodenseitigen Träger (7) und ein Trägerschwenkgelenk (8) aufweist, wobei der zeltbodenseitige Träger (7) mittels des Trägerschwenkgelenks (8) schwenkbar am heckseitigen Träger (6) befestigt ist.

2. Zelt (1) nach Anspruch 1, **dadurch gekennzeichnet, dass** das Trägerschwenkgelenk (8) eine, im fertig am Heck (4) des Kraftfahrzeugs (5) montierten Zustand des Zelts (1), vertikal verlaufende Schwenkachse (9) aufweist, um die der zeltbodenseitige Träger (7) relativ zum heckseitigen Träger (6) verschwenkbar ist.

3. Zelt (1) nach Anspruch 1 oder 2, **dadurch gekennzeichnet, dass** der heckseitige Träger (6) als länglich erstreckter Tragbalken ausgebildet ist und/oder dass der zeltbodenseitige Träger (7) als länglich erstreckter Tragbalken ausgebildet ist und/oder dass der heckseitige Träger (6) und der zeltbodenseitige Träger (7) an jeweils einem ihrer Enden mittels des Trägerschwenkgelenks (8) schwenkbar miteinander verbunden sind.

4. Zelt (1) nach einem der Ansprüche 1 bis 3, **dadurch gekennzeichnet, dass** die Zeltbodenplatte (2) an einem Bodenplattenträger (10) befestigt ist und der Bodenplattenträger (10) am zeltbodenseitigen Träger (7) befestigt ist.

5. Zelt (1) nach Anspruch 4, **dadurch gekennzeichnet, dass** die Zeltbodenplatte (2) mittels zumindest eines Bodenplattenschwenkgelenks (11) am Bodenplattenträger (10) schwenkbar befestigt ist.

6. Zelt (1) nach Anspruch 5, **dadurch gekennzeichnet, dass** das Bodenplattenschwenkgelenk (11) eine, im fertig am Heck (4) des Kraftfahrzeugs (5) montierten Zustand des Zelts (1), horizontal verlaufende Schwenkachse (12) aufweist, um die die Zeltbodenplatte (2) relativ zum Bodenplattenträger (10) verschwenkbar ist.

7. Zelt (1) nach Anspruch 5 oder 6, **dadurch gekennzeichnet, dass** die Zeltbodenplatte (2) in einer Transportstellung des Zelts (1) zusätzlich zu dem zumindest einen Bodenplattenschwenkgelenk (11) mittels zumindest einer lösbaren Bodenplattenarretierung (13) am Bodenplattenträger (10) fixierbar ist, wobei die zumindest eine Bodenplattenarretierung (13) zumindest in der Transportstellung distanziert zu dem zumindest einen Bodenplattenschwenkgelenk (11), vorzugsweise distanziert zu allen Bodenplattenschwenkgelenken (11), angeordnet ist.

8. Zelt (1) nach einem der Ansprüche 4 bis 7, **dadurch gekennzeichnet, dass** der Bodenplattenträger (10) mittels einer lösbaren Arretierungsvorrichtung (14) am zeltbodenseitigen Träger (7), vorzugsweise werkzeuglos, befestigbar und von diesem, vorzugsweise werkzeuglos, ablösbar ist.

9. Zelt (1) nach einem der Ansprüche 1 oder 8, **dadurch gekennzeichnet, dass** die Zeltbodenplatte (2) in einer bzw. der Transportstellung des Zelts (1) mittels zumindest einer, auf Zug spannbaren, Spannvorrichtung (15) des Zelts (1) gegen den zeltbodenseitigen Träger (7) abspannbar ist.

10. Zelt (1) nach einem der Ansprüche 1 bis 9, **dadurch gekennzeichnet, dass** die Zeltbodenplatte (2) zumindest zwei klappbar miteinander verbundene Zeltbodenteilplatten (16, 17) aufweist, und/oder dass das Zelt (1) zumindest eine, mit der Zeltbodenplatte (2) verbundene oder verbindbare, in einer aufgebauten Stellung des Zelts (1) über die Zeltbodenplatte (2) gespannte Zeltplane (18) aufweist.
